# EUROPÄISCHE PATENTANMELDUNG

(11) **EP 0 648 930 A2**
(43) Veröffentlichungstag der Anmeldung: **19.04.1995**
(21) Anmeldenummer: 94115489.0
(22) Anmeldetag: 30.09.1994
(51) Int. Cl.: F02P 5/15, F02D 35/02, F02D 21/08, F02B 77/08

(54) **Klopfregel- und Klopfüberwachungsverfahren für eine mehrzylindrige Brennkraftmaschine mit einem speziellen Klopfdetektionszylinder**

(30) Priorität: 13.10.1993 DE 4334869
(71) Anmelder: MAN Technologie AG, 80997 München (DE)
(72) Erfinder: Hirschbichler, Franz, Dr.-Ing., D-80995 München (DE)
(74) Vertreter: Walter, Helmut, Dipl.-Ing.

(57) **Zusammenfassung**

Es wird ein Verfahren zur Klopfregelung- und/oder Klopfüberwachung für eine Brennkraftmaschine mit mehreren Zylindern sowie eine solche Brennkraftmaschine vorgeschlagen, bei der die Verbrennungsbedingungen bei einem Zylinder gezielt so vorverändert werden, daß dieser Zylinder zuerst zu klopfen beginnt und nur eine Klopfüberwachung bei diesem Zylinder erforderlich ist und daß durch gezielte Veränderung von Parametern die Brennkraftmaschine auch dann noch sicher weiterbetrieben werden kann, wenn aufgrund von Änderungen der Brennstoffqualität oder anderer Betriebsparameter klopfende Verbrennung einsetzt.

## Beschreibung

Die vorliegende Erfindung betrifft ein Verfahren zur Klopfüberwachung und/oder Klopfregelung einer Brennkraftmaschine mit mehreren Zylindern sowie eine Brennkraftmaschine zur Durchführung eines solchen Verfahrens.

Bei Brennkraftmaschinen wird die Zylinderladung entweder durch Fremdzündung (Zündkerze etc.) oder durch Selbstzündung des flüssig eingespritzten Brennstoffs gezündet. Eine der Formen unkontrollierter Zündung des Brennstoffs ist klopfende Verbrennung. Dabei entstehen Druckwellen, die zu einer Beschädigung der Maschine führen können. Daher ist es wichtig, daß das Klopfen vermieden wird.

Generell werden Brennkraftmaschinen so konstruiert, daß sie bei normalen Betriebsbedingungen nicht klopfen. Jedoch steigt die Gefahr des Klopfens gerade bei sich stark ändernden Betriebsbedingungen, was beispielsweise beim Fahrbetrieb von Kraftfahrzeugen auftreten kann. Aber auch bei Gasmotoren, wie sie beispielsweise in Blockheizkraftwerken, Wärmepumpen, Verdichterantrieben oder dergleichen eingesetzt werden, können sich die Betriebsbedingungen derart ändern, daß eine klopfende Verbrennung einsetzt. Betriebsparameter, die einen Einfluß auf den Verbrennungsvorgang haben, sind beispielsweise die Verbrennungslufttemperatur, die Kühlwassertemperatur des Motors oder eines Ladeluftkühlers, eine Veränderung der Leistung, eine Drift des Zündzeitpunkts oder aber auch eine Änderung der Gasqualität. Gerade die Gasqualität kann sich bei stationären Gasmotoren wesentlich im Winter ändern, da dann oftmals Flüssiggas (Propan, Butan) dem Erdgas beigemischt wird, wodurch sich die Klopffestigkeit des Gasgemisches wesentlich reduziert.

Aus dem Automobilbau sind Klopfregelungen bekannt, bei denen jeweils ein Klopfsensor an jedem Zylinder eines Benzinmotors angeordnet ist, um so den Verbrennungsablauf in jedem Zylinder optimal regeln zu können. Eine solche Klopfregelung erfordert eine Vielzahl von Sensoren, eine individuelle Verstellbarkeit der Verbrennungsbedingungen für die einzelnen Zylinder und aufwendige Regelvorgänge.

Demgegenüber liegt der Erfindung die Aufgabe zugrunde, ein einfaches, kostengünstiges und dennoch sicheres Verfahren zur Klopfüberwachung und/oder Klopfregelung für eine Brennkraftmaschine mit mehreren Zylindern bzw. eine solche Brennkraftmaschine zu schaffen.

Die Aufgabe wird erfindungsgemäß für ein Verfahren dadurch gelöst, daß bei einem ausgewählten Zylinder wenigstens ein das Klopfverhalten beeinflussender Parameter so voreingestellt wird, daß der ausgewählte Zylinder bei einer Veränderung der Verbrennungsbedingungen als erster aller Zylinder zu klopfen beginnt, daß nur das Klopfverhalten des ausgewählten Zylinders überwacht wird, und daß entweder bei festgestelltem Klopfen die Maschine abgeschaltet oder in Abhängigkeit vom Klopfverhalten wenigstens ein das Klopfverhalten beeinflussender Parameter für alle Zylinder verändert wird.

Eine erfindungsgemäße Brennkraftmaschine mit mehreren Zylindern zeichnet sich dadurch aus, daß nur an einem einzigen ausgewählten Zylinder ein Schallsensor angeordnet ist, daß der Zündzeitpunkt oder der Einspritzzeitpunkt des ausgewählten Zylinders gegenüber den anderen Zylindern vorverstellt ist, und daß die Vorrichtung zur Klopfüberwachung und/oder Klopfregelung eine Abschalteinrichtung für die Brennkraftmaschine und/oder eine kollektive Verstellung von wenigstens einem das Klopfverhalten beeinflussenden Parameter für alle Zylinder in Abhängigkeit vom Klopfverhalten des ausgewählten Zylinders aufweist.

Eine wesentliche Idee der Erfindung liegt darin, daß die Verbrennungsbedingungen bei dem ausgewählten Zylinder gezielt so verändert werden, daß dieser bei sich verschlechternden Betriebsbedingungen hinsichtlich des Klopfens als erster zu klopfen beginnt. Tritt an dem ausgewählten Zylinder kein Klopfen auf, so ist aufgrund der voreingestellten Verbrennungsbedingungen sichergestellt, daß die anderen Zylinder trotz eventueller Toleranzen, die ein unterschiedliches Klopfverhalten bedingen können, nicht klopfen. Wenn sich die Betriebsbedingungen verändern, also beispielsweise bei einem stationären Gasmotor die Klopffestigkeit des zugeführten Gases durch eine erhöhte Beimischung von Flüssiggas verringert wird, beginnt als erstes der ausgewählte Zylinder zu klopfen. Dies wird registriert, und es kann unverzüglich ein das Klopfverhalten beeinflussender Parameter so verändert werden, daß das Klopfen wieder aufhört. Alternativ oder ergänzend dazu ist es auch möglich, die Brennkraftmaschine abzuschalten. Auf diese Art und Weise können bei auftretendem Klopfen Maßnahmen ergriffen werden, die eine Schädigung der Brennkraftmaschine verhindern. Da erfindungsgemäß nur bei einem Zylinder das Klopfverhalten überwacht wird, ist nur ein geringer technischer und damit auch finanzieller Aufwand erforderlich, und es wird ein einfacher Regelungsablauf ermöglicht.

Bevorzugt wird zur Voreinstellung des ausgewählten Zylinders dessen Zündzeitpunkt oder dessen Einspritzzeitpunkt, je nachdem ob es sich um einen Otto- oder Dieselmotor handelt, gegenüber den anderen Zylindern auf einen früheren Zeitpunkt voreingestellt. Eine solche Vorverstellung ist gerade dann besonders einfach, wenn sie auf elektronischem Wege erzeugt werden kann. Durch das Vorverstellen des Zeitpunkts wird der ausgewählte Zylinder klopffreudiger, und er kann so seine Funktion als "Leitzylinder" erfüllen.

Vorzugsweise werden als Parameter, die das Klopfverhalten beeinflussen, für alle Zylinder kollektiv der Zündzeitpunkt oder der Einspritzzeitpunkt, die Leistung des Motors oder das Verbrennungsluftverhältnis verstellt. Die Auswahl der Parameter, die verstellt werden, hängt einerseits von den gebotenen Verstellmöglichkeiten bei einer Brennkraftmaschine und andererseits von den zu erwartenden Variationsbereichen in den Verbrennungsbedingungen ab, die zum Verhindern eines Klopfens durch die kollektive Verstellung kompensiert werden müssen. Durch die gebotenen Variationsmöglichkeiten bei der Auswahl der Verstellparameter ist es möglich, eine optimale Lösung für jeden Anwendungsfall zu finden.

Eine größtmögliche Sicherheit für die Brennkraftmaschine bei einfachen Regelvorgängen wird dadurch erreicht, daß bei festgestelltem Klopfen erst nacheinander jeweils ein das Klopfverhalten beeinflussender Parameter verstellt wird und daß, wenn das Klopfen anhält, schließlich die Maschine abgeschaltet wird.

Eine besonders einfache Klopfüberwachung zur Beurteilung des Verbrennungsverhaltens des ausgewählten Zylinders wird dadurch erreicht, daß der Schallpegel des ausgewählten Zylinders über einen bestimmten Phasenwinkelbereich integriert und mit einem voreinstellbaren Schwellwert verglichen wird. Da ein Klopfen zu einem Ansteigen des Schallpegels führt und die Messung durch die Integration über einem festen Phasenwinkelbereich drehzahlunabhängig ist, wird auf diese Art und Weise eine sichere Feststellung eines Klopfens des ausgewählten Zylinders ermöglicht.

Bevorzugt wird das erfindungsgemäße Verfahren bei einem stationären Gasmotor angewendet. Da stationäre Gasmotoren üblicherweise bei konstanter Leistung und konstanter Drehzahl betrieben werden, ergibt sich grundsätzlich ein relativ kleiner Schwankungsbereich der Verbrennungsbedingungen. Gerade in diesem Fall kann es dann ausreichend sein, nur ein Klopüberwachungsverfahren einzusetzen, also den Gasmotor bei auftretendem Klopfen abzuschalten. Andererseits kann es aufgrund des geringen Schwankungsbereichs auch hinreichend sein, lediglich die kollektive Verstellung eines einzigen das Klopfverhalten beeinflussenden Parameters vorzusehen, so daR sich wiederum eine einfache und kostengünstige Klopfregelung verwirklichen läßt.

Nachfolgend wird die Erfindung an Hand der Zeichnung näher erläutert. Es ist gezeigt
eine kombinierte schematische Darstellung einer erfindungsgemäßen Klopfregelung für einen Otto- sowie für einen Dieselmotor.

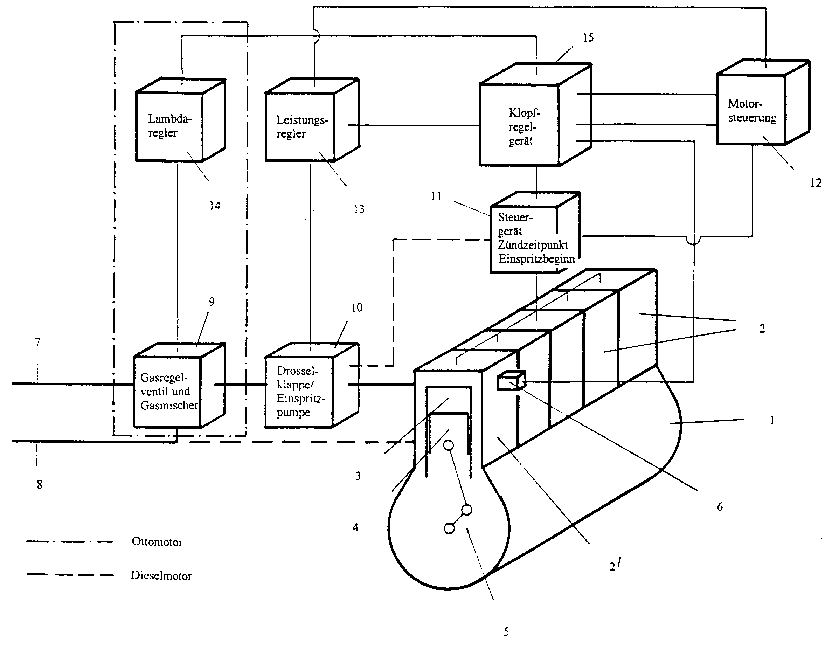

Figur 1 zeigt eine Brennkraftmaschine 1 mit fünf Zylindern 2. Zuerst wird nun eine Ausführungsvariante beschrieben, bei der die Brennkraftmaschine 1 als ein Gasmotor ausgebildet ist, der nach dem Otto-Prinzip arbeitet.

Brennstoff 7, hier Erdgas, und Verbrennungsluft 8 werden den Zylindern 2 des Motors 1 über Gasregelventil und Gasmischer 9 zugeleitet. Im Gasmischer 9 entsteht ein Brennstoff/Luft-Gemisch, das in einem Zylinderraum 3 der Zylinder 2 jeweils durch einen Kolben 4 verdichtet und mittels einer Zündeinrichtung, gesteuert durch eine Steuereinheit 11, gezündet wird. Eine Motorsteuerung 12 wirkt über einen Leistungsregler 13 auf eine vor den Zylindern 2 angeordnete Drosselklappe 10 zur Steuerung der Motorleistung, indem die Drosselklappe 10 die Menge des dem Motor 1 zugeführten Brennstoff/Luft-Gemisches steuert. Dabei erzeugt die Motorsteuerung 12 einen Leistungs-Sollwert, nach dem der Leistungsregler 13 die Stellung der Drosselklappe 10 regelt.

Durch die Zündung wird der Verbrennungsvorgang in jedem Zylinder 2 gestartet, bevor der jeweilige Kolben 4 den oberen Druckpunkt erreicht, daß heißt, bevor die Kolben 4 ihre höchste Position und die größte Verdichtung erreichen. Da diese Vorgänge periodisch ablaufen, wird zur Charakterisierung ein Phasenwinkel, der einen Wert von 0 bis 360° annehmen kann, verwendet. Der Phasenwinkel kann grafisch auch als ein Drehwinkel einer hier nur schematisch angedeuteten Kurbelwelle 5 verstanden werden. Die Motorsteuerung 12 greift auch auf die Steuereinheit 11 zu, so daß eine Zündung des Brennstoff/Luft-Gemisches in den Zylinderräumen 3 nur bei eingeschaltetem Motor erfolgen kann.

Im dargestellten Ausführungsbeispiel ist weiterhin ein Lambda-Regler 14 vorgesehen, der das Brennstoff/Verbrennungsluft-Verhältnis entsprechend dem eingesetzten Lambda-Regelkonzept durch Zugriff auf den Gasmischer 9 regelt.

Im Ausführungsbeispiel ist an dem in der Darstellung vorderen Zylinder 2' ein Klopfsensor 6 angeordnet, dessen Signale von einem Klopfregelgerät 15 aufgenommen werden. Schallsignale des Klopfsensors 6 werden im Klopfregelgerät 15 während eines vordefinierten Phasenwinkelbereichs, der beispielsweise +-30° o.T. (Phasenwinkel bezüglich des oberen Totpunkts des Kolbens 4) beträgt, aufintegriert. Die hierzu notwendige Phasenwinkelinformation erhält das Klopfregelgerät 15 von der Zündsteuereinheit 11 oder einem sonstigen mit dem Phasenablauf korrelierten Signalgeber. Die so erhaltenen Integrationswerte sind drehzahlunabhängig und werden mit einem voreingestellten Schwellwert verglichen. Übersteigt der Integrationswert den Schwellwert oder wird eine gewisse Rate (Häufigkeit) über dem Schwellwert liegender Integrationswerte festgestellt, so erkennt das Klopfregelgerät 15 den Zustand "Klopfen". Auf diese Art und Weise wird das Klopfverhalten des ausgewählten Zylinders 2' überwacht. Ein Klopfen kann beispielsweise durch eine Beimischung von Flüssiggas zu dem normalerweise bei stationären Gasmotoren verwendeten Erdgas verursacht werden, da die wesentlichen Bestandteile des Flüssiggases (Propan, Butan) eine viel geringere Klopffestigkeit als das Erdgas aufweisen.

In dem Ausführungsbeispiel wird der Zündzeitpunkt des ausgewählten Zylinders 2' vom Klopfregelgerät 15 über die Steuereinheit 11 in einer Grundeinstellung auf 14° vor o.T. und der Zündzeitpunkt für die anderen Zylinder 2 auf 12° vor o.T. eingestellt. Durch diese Voreinstellung wird erreicht, daß der ausgewählte Zylinder 2' klopffreudiger als die anderen Zylinder 2 ist. Daher kann das Klopfverhalten des Zylinders 2' repräsentativ für den gesamten Gasmotor 1 verwendet werden.

Nach festgestelltem Klopfen kann das Klopfregelgerät 15 in einer besonders einfachen ersten Variante, in der es als Klopfüberwachungsgerät arbeitet, den Gasmotor 1 über die Motorsteuerung 12 abschalten. So wird eine Schädigung des Motors durch das Klopfen vermieden.

In einer zweiten Variante wird bei festgestelltem Klopfen der Zündzeitpunkt für alle Zylinder 2 und 2' durch das Klopfregelgerät 15 über die Steuereinheit 11 für die Zündung kollektiv in Richtung spät, also näher zum oberen Totpunkt, verstellt, um dem Klopfen entgegenzuwirken. Diese Verstellung kann beispielsweise um einen bestimmten Betrag oder in Stufen erfolgen, die nacheinander durchlaufen werden, wenn das Klopfen des ausgewählten Zylinders 2', der eine Leitfunktion für alle anderen Zylinder 2 übernimmt, nicht aufhört.

Sollte die beschriebene Verstellung des Zündzeitpunktes nicht ausreichend sein und das Klopfen fortdauern, so kann das Klopfregelgerät 15 entweder eine Abschaltung des Motors 1 über die Motorsteuerung 12 verursachen oder zuvor in einem zusätzlichen Schritt noch eine Rücknahme der Leistung über den Leistungsregler 13 bewirken. Die Leistungsverstellung kann wiederum in verschieden Stufen erfolgen. Durch eine Rücknahme der Leistung wird die Klopffreudigkeit des Motors 1 verringert, so daß dies bereits ausreichend sein kann, um ein Klopfen des ausgewählten Zylinders 2' zu beseitigen, so daß eine Abschaltung des Motors 1 nicht erforderlich wird.

In einem weiteren Schritt besteht dann noch die Möglichkeit, bei anhaltendem Klopfen das Brennstoff/Luft-Gemisch über den Lambda-Regler 14 gegebenenfalls so zu verstellen, daß die Klopffreudigkeit des Motors 1 abnimmt. Dies bedeutet konkret, daß das Gemisch magerer eingestellt wird, also der Anteil der Verbrennungsluft 8 gegenüber dem Anteil an Brennstoff 7 erhöht wird.

Als letzte Möglichkeit bei weiterhin anhaltendem Klopfen verbleibt dann nur noch die Möglichkeit, den Motor 1 über die Motorsteuerung 12 abzuschalten.

Sollte jedoch eine der bereits angesprochenen Verstellmaßnahmen erfolgreich sein, also zu einer Beendigung des Klopfens des ausgewählten Zylinders 2' führen, so versucht das Klopfregelgerät 15 nach einer gewissen Verzögerungszeit, die Einstellung der Parameter unter ständiger Überwachung des Klopfverhaltens des ausgewählten Zylinders 2' wieder auf den Ausgangszustand zurückzustellen. Eine solche Rückstellung kann wiederum wahlweise in Stufen oder stufenlos mit einer entsprechend geringen Rückstellgeschwindigkeit erfolgen.

Alle Verstellvorgänge können stufenlos oder in einer oder mehreren diskreten Stufen ausgeführt werden.

Die beschriebene Abfolge der Verstellung von Zündzeitpunkt, Leistung und Verbrennungsluftverhältnis kann je nach den Anforderungen und Möglichkeiten in ihrer Reihenfolge vertauscht und/oder auf eine beliebige Auswahl von nur einem oder zwei der beispielhaft genannten Parameter reduziert werden.

Im beschrieben Ausführungsbeispiel wird die größere Klopffreudigkeit des ausgewählten Zylinders 2' gegenüber den anderen Zylindern 2 dadurch erreicht, daß er eine Differenz im Zündzeitpunkt zu den anderen Zylindern 2 aufweist. Diese Differenz kann fest vorgegeben oder selbst mit einer kollektiven Veränderung des Zündzeitpunkts variiert werden, um einerseits die Differenz ausreichend groß einzustellen, so daß der ausgewählte Zylinder 2' als erster zu klopfen beginnt, und andererseits aber die Differenz möglichst klein zu halten, damit die anderen Zylinder 2 in Abhängigkeit von der Klopfregelung nach dem ausgewählten Zylinder 2' nahe an ihrer Klopfgrenze betrieben werden, um einen hohen Wirkungsgrad des Gasmotors 1 zu erreichen.

Im Ausführungsbeispiel wird der Zündzeitpunkt des ausgewählten Zylinders 2' vorverändert. Dies ist bei einer elektronischen Steuerung der Zündung besonders einfach zu bewerkstelligen. Es ist aber auch möglich, stattdessen oder zusätzlich einen anderen das Klopfverhalten beeinflussenden Parameter von vornherein so zu ändern, daß der ausgewählte Zylinder 2' klopffreudiger als die anderen Zylinder 2 ist.

In einer weiteren Ausführungsvariante weist die dargestellte Klopfregelung wenigstens zwei wählbare Grundeinstellungen des Zündzeitpunkts für verschiedene Gassorten auf. So kann der Gasmotor 1 durch entsprechendes Umschalten der Motorsteuerung 12, die zum Beispiel ein digitales Signal an das Klopfregelgerät 15 gibt, welches ein korrespondieres analoges Signal an die Zünd-Steuereinheit 11 weiterleitet, besonders einfach auf die Verbrennung einer anderen Gassorte mit einem anderen Verbrennungs- und Klopfverhalten umgestellt werden. Die Klopfregelung regelt dann ausgehend von der gewählten Grundeinstellung die Verbrennungsparameter. Eine solche Umschaltung ist beispeilsweise bei Klärwerken zum wahlweisen Betrieb des Gasmotors mit Klärgas und mit Propan notwendig, da sich diese Gase sehr in ihrem Verbrennungsverhalten und in ihrer Klopffestigkeit unterscheiden.

Gegebenenfalls wird durch die wählbare Grundeinstellung auch ein Grundwert für eine Einstellung des Gasregelventils 9 und/oder ein Grundwert für die Leistung vorgegeben.

Das bisher dargestellte Klopfregel- bzw. Klopfüberwachungsverfahren kann entsprechend bei einer Brennkraftmaschine 1 angewendet werden, die nach dem Dieselprinzip arbeitet. Hierbei wird der Brennstoff 7 von einer Einspritzpumpe anstelle der Drosselklappe 10 dem Motor 1 zugeführt. Der Einspritzzeitpunkt wird dann entsprechend von der Steuereinheit 11 gesteuert.

Die Klopfüberwachung bzw. -regelung erfolgt im wesentlichen wie oben beschrieben. Jedoch wird beim Dieselmotor nicht der Zündzeitpunkt, sondern stattdessen der Einspritzzeitpunkt verändert. So wird der Einspritzzeitpunkt des ausgewählten Zylinders 2' gegenüber den anderen Zylindern 2 vorab auf einen früheren Zeitpunkt vor dem oberen Totpunkt eingestellt, um eine entsprechend größere Klopffreudigkeit des ausgewählten Zylinders 2' zu erreichen. Bevorzugt ist dabei eine elektronische Einstellung des Einspritzzeitpunkts vorgesehen, da dann eine besonders einfache Klopfregelung ohne größeren technischen Aufwand realisiert werden kann. Im übrigen sind die oben beschriebenen Variationsmöglichkeiten in den Verbrennungsparametern zur Voreinstellung des ausgewählten Zylinders 2' und zur kollektiven Verstellung bei allen Zylindern 2 entsprechend möglich.

## Patentansprüche

1. Verfahren zur Klopfüberwachung und/oder Klopfregelung einer Brennkraftmaschine mit mehreren Zylindern,
dadurch gekennzeichnet,
daß bei einem ausgewählten Zylinder (2') wenigstens ein das Klopfverhalten beeinflussender Parameter so voreingestellt wird, daß der ausgewählte Zylinder (2') bei einer Veränderung der Verbrennungsbedingungen als erster aller Zylinder (2) zu klopfen beginnt,
daß nur das Klopfverhalten des ausgewählten Zylinders (2') überwacht wird,
und daß entweder bei festgestelltem Klopfen die Maschine (1) abgeschaltet oder in Abhängigkeit vom Klopfverhalten des ausgewählten Zylinders (2') wenigstens ein das Klopfverhalten beeinflussender Parameter für alle Zylinder (2) verändert wird.

2. Verfahren nach Anspruch 1, dadurch gekennzeichnet, daß der Zündzeitpunkt oder der Einspritzzeitpunkt des ausgewählten Zylinders (2') gegenüber den anderen Zylindern (2) auf einen früheren Zeitpunkt voreingestellt wird.

3. Verfahren nach Anspruch 1 oder 2, dadurch gekennzeichnet, daß der Zündzeitpunkt als ein das Klopfverhalten beeinflussender Parameter in Abhängigkeit vom Klopfverhalten des ausgewählten Zylinders (2') für alle Zylinder (2) verändert wird.

4. Verfahren nach Anspruch 1 oder 2, dadurch gekennzeichnet, daß der Einspritzzeitpunkt als ein das Klopfverhalten beeinflussender Parameter in Abhängigkeit vom Klopfverhalten des ausgewählten Zylinders (2') für alle Zylinder (2) verändert wird.

5. Verfahren nach einem der vorangehenden Ansprüche, dadurch gekennzeichnet, daß die Leistung der Maschine (1) als ein das Klopfverhalten beeinflussender Parameter in Abhängigkeit vom Klopfverhalten des ausgewählten Zylinders (2') verändert wird.

6. Verfahren nach einem der vorangehenden Ansprüche, dadurch gekennzeichnet, daß das Verbrennungsluftverhältnis als ein das Klopfverhalten beeinflussender Parameter in Abhängigkeit vom Klopfverhalten des ausgewählten Zylinders (2') für alle Zylinder (2) verändert wird.

7. Verfahren nach einem der vorangehenden Ansprüche, dadurch gekennzeichnet, daß bei festgestelltem Klopfen nacheinander wenigstens ein das Klopfverhalten beeinflussender Parameter in Abhängigkeit vom Klopfverhalten des ausgewählten Zylinders (2') für alle Zylinder (2) verändert und , falls das Klopfen anhält, schließlich die Maschine (1) abgeschaltet wird.

8. Verfahren nach einem der vorangehenden Ansprüche, dadurch gekennzeichnet, daß zur Überwachung des Klopfverhaltens des ausgewählten Zylinders (2') dessen Schallpegel über einen bestimmten Phasenwinkelbereich integriert und mit einem voreinstellbaren Schwellwert verglichen wird.

9. Verwendung eines Verfahrens nach einem der vorangehenden Ansprüche für einen stationären Gasmotor.

10. Brennkraftmaschine mit mehreren Zylindern und einer Vorrichtung zur Klopfüberwachung und/oder Klopfregelung mittels Schallsensoren,
dadurch gekennzeichnet,
daß nur an einem einzigen ausgewählten Zylinder (2') ein Schallsensor (6) angeordnet ist,
daß der Zündzeitpunkt oder der Einspritzzeitpunkt des ausgewählten Zylinders (2') gegenüber den anderen Zylindern (2) vorverstellt ist,
und daß die Vorrichtung (15) zur Klopfüberwachung und/oder Klopfregelung eine Abschalteinrichtung für die Brennkraftmaschine (1) und/oder eine kollektive Verstellung von wenigstens einem das Klopfverhalten beeinflussenden Parameter für alle Zylinder (2) in Abhängigkeit vom Klopfverhalten des ausgewählten Zylinders (2') aufweist.

11. Brennkraftmaschine nach Anspruch 10, dadurch gekennzeichnet, daß der Zündzeitpunkt kollektiv verstellbar ist.

12. Brennkraftmaschine nach Anspruch 10, dadurch gekennzeichnet, daß der Einspritzzeitpunkt kollektiv verstellbar ist.

13. Brennkraftmaschine nach einem der Ansprüche 10 bis 12, dadurch gekennzeichent, daß die Leistung der Maschine (1) durch die Vorrichtung (15) zur Klopfregelung verstellbar ist.

14. Brennkraftmaschine nach einem der Ansprüche 10 bis 13, dadurch gekennzeichent, daß das Verbrennungsluftverhältnis kollektiv verstellbar ist.

15. Brennkraftmaschine nach einem der Ansprüche 10 bis 14, dadurch gekennzeichent, daß die Brennkraftmaschine (1) ein stationärer Gasmotor ist.
